# EUROPÄISCHE PATENTANMELDUNG

(11) **EP 4 539 179 A1**
(43) Veröffentlichungstag der Anmeldung: **16.04.2025**
(21) Anmeldenummer: 23202864.7
(22) Anmeldetag: 11.10.2023
(51) Int. Cl.: H01M 10/04, H01M 50/181, H01M 10/0525, H01M 50/184, H01M 50/186, H01M 50/193, H01M 50/559, H01M 10/054, H01M 10/0585, H01M 10/0587

(54) **ELEKTROCHEMISCHES ENERGIESPEICHERELEMENT, INSBESONDERE IN FORM EINER MINIATURZELLE**

(71) Anmelder: VARTA Microbattery GmbH, 73479 Ellwangen Jagst (DE)
(72) Erfinder: Fischer, Claus-Christian, 73479 Ellwangen (DE); Kilibarda, Goran, 73527 Schwäbisch Gmünd (DE)
(74) Vertreter: Ostertag & Partner Patentanwälte mbB

(57) **Zusammenfassung**

Es werden ein elektrochemisches Energiespeicherelement (100), insbesondere in Form einer Knopfzelle, sowie ein Verfahren zur Herstellung solcher Energiespeicherelemente beschrieben. Das Energiespeicherelement (100) umfasst ein Gehäuse (10) und mindestens einen innerhalb des Gehäuses angeordneten Elektroden-Separator-Verbund (101). Das Gehäuse (10) umfasst ein becherförmiges Gehäuseteil (11) mit einem Boden (11a), einer umlaufenden Seitenwand (11b) und einer Öffnung, sowie ein Deckelteil (12), das die Öffnung verschließt. Der Boden (11a) des becherförmigen Gehäuseteils (11) umfasst eine Bodenplatte (11e) mit einer Durchbrechung und eine metallische Polscheibe (14), die in der Durchbrechung fixiert ist. Zwischen der Polscheibe (14) und der Bodenplatte (11e) befindet sich ein die Polscheibe (14) umlaufender Spalt, der mit einem elektrisch isolierenden Material (15) ausgefüllt ist.

## Beschreibung

Die vorliegende Erfindung betrifft ein elektrochemisches Energiespeicherelement, insbesondere in Form einer Miniaturzelle, sowie ein Verfahren zur Herstellung eines solchen Energiespeicherelements.

### ANWENDUNGSGEBIET UND STAND DER TECHNIK

Elektrochemische Energiespeicherelemente sind dazu in der Lage, gespeicherte chemische Energie durch eine Redoxreaktion in elektrische Energie umzuwandeln. Sie umfassen in der Regel mindestens eine Energiespeicherzelle mit einer positiven und einer negativen Elektrode, die von einem Separator voneinander getrennt sind. Bei einer Entladung werden an der negativen Elektrode durch einen Oxidationsprozess Elektronen freigesetzt. Hieraus resultiert ein Elektronenstrom, der von einem externen elektrischen Verbraucher abgegriffen werden kann, für den die mindestens eine elektrochemische Energiespeicherzelle als Energielieferant dient. Zugleich kommt es zu einem der Elektrodenreaktion entsprechenden lonenstrom innerhalb der Zelle. Dieser lonenstrom durchquert den Separator und wird durch einen ionenleitenden Elektrolyten ermöglicht.

Wenn die Entladung reversibel ist, also die Möglichkeit besteht, die bei der Entladung erfolgte Umwandlung von chemischer Energie in elektrische Energie wieder umzukehren und damit die Zelle wieder zu laden, spricht man von einer sekundären Zelle. Die bei sekundären Zellen allgemein übliche Bezeichnung der negativen Elektrode als Anode und die Bezeichnung der positiven Elektrode als Kathode bezieht sich auf die Entladefunktion der elektrochemischen Zelle.

Für viele Anwendungen werden heute Lithium-Ionen-Zellen eingesetzt, da diese Zellen hohe Ströme bereitstellen können und sich durch eine vergleichsweise hohe Energiedichte auszeichnen. Sie basieren auf dem Einsatz von Lithium, welches in Form von Ionen zwischen den Elektroden der Zelle hin und her wandern kann.

Die negativen und positiven Elektrode von Energiespeicherelementen werden oftmals von sogenannten Kompositelektroden gebildet, die neben elektrochemisch aktiven Komponenten auch elektrochemisch inaktive Komponenten umfassen. Die Kompositelektroden werden oftmals mit einem oder mehreren Separatoren zu einem Verbundkörper kombiniert. Hierbei werden die Elektroden und Separatoren, gegebenenfalls unter Anwendung von Lamination oder Verklebung, zu einem Verbundkörper miteinander verbunden. Die grundsätzliche Funktionsfähigkeit der Zelle kann durch Tränkung des Verbundes mit einem Elektrolyten hergestellt werden. Alternativ kann an Stelle eines mit einem Elektrolyten getränkten Separators auch ein Festkörperelektrolyt eingesetzt werden.

In vielen Ausführungsformen wird der Verbundkörper in Form eines Wickels gebildet oder zu einem Wickel verarbeitet. In der Regel umfasst der Verbundkörper die Sequenz positive Elektrode / Separator / negative Elektrode. Häufig werden Verbundkörper als sogenannte Bizellen mit den möglichen Sequenzen negative Elektrode / Separator / positive Elektrode / Separator / negative Elektrode oder positive Elektrode / Separator / negative Elektrode / Separator / positive Elektrode hergestellt. In anderen Ausführungsformen wird der Elektroden-Separator-Verbund in Form eines Stapels aus Elektroden mit dazwischenliegenden Separatoren gebildet.

Energiespeicherelemente weisen oftmals eine zylindrische Bauform auf. Hierbei werden einerseits zylindrische Rundzellen und andererseits Knopfzellen voneinander unterschieden. Zylindrische Rundzellen zeichnen sich dadurch aus, dass ihre Höhe größer als ihr Durchmesser ist. Knopfzellen hingegen weisen eine Höhe auf, die kleiner als der Durchmesser ist. Darüber hinaus sind zylindrische Zellen allgemein deutlich größer dimensioniert als Knopfzellen. Die Nennkapazität einer Knopfzelle hat typischerweise einen Wert < 1500 mAh. Zylindrische Rundzellen können in Ausführungsformen als Lithium-Ionen-Zellen Kapazitäten von beispielsweise 90.000 mAh erreichen.

Knopfzellen werden zum Teil in sehr kleinen Bauformen angeboten. Sie eignen sich beispielsweise zur Versorgung von kleinen elektronischen Geräten wie Uhren, Hörgeräten, kabellosen Kopfhörern oder Ähnlichem.

Knopfzellen weisen klassisch meist ein Gehäuse aus zwei becherförmigen Gehäusehalbteilen auf. Das eine Gehäusehalbteil bildet einen Zellenbecher und das andere Gehäusehalbteil bildet einen Zellendeckel. Diese Halbteile können beispielsweise aus vernickeltem Tiefziehblech als Stanzziehteile hergestellt werden.

Der flüssigkeitsdichte Verschluss bei Knopfzellen kann beispielsweise durch ein Umbördeln des Rands des Zellenbechers über den Rand des Zellendeckels in Verbindung mit einem Kunststoffring, der zwischen Zellenbecher und Zellendeckel angeordnet ist, vorgenommen werden. Der Kunststoffring dient als Dichtungselement und sorgt gleichzeitig für eine elektrische Isolierung zwischen dem Zellenbecher und dem Zellendeckel.

Andere Knopfzellen werden gefertigt, indem der Zellenbecher und der Zellendeckel in axialer Richtung durch eine ausschließlich oder primär kraftschlüssige Verbindung zusammengehalten werden. Dementsprechend müssen diese Zellen nicht zwingend einen gebördelten Becherrand aufweisen. Zur Abdichtung des Gehäuses und zur elektrischen Isolierung zwischen den Polen der Zelle ist zwischen dem Zellenbecher und dem Zellendeckel eine Dichtung vorgesehen, die beispielsweise von einer thermoplastischen Foliendichtung ausgebildet sein kann. Eine derartige Knopfzelle geht beispielsweise aus der DE 102009017514 A1 hervor. Bei dem beschriebenen Herstellungsverfahren wird auf den umgebogenen Rand eines Zellendeckels die Dichtung aufgebracht, und der Zellendeckel wird zusammen mit der Dichtung in den Zellenbecher eingeschoben.

Das Gehäuse derartiger Knopfzellen weist einen mehrlagigen Mantelbereich auf, in dem der Zellenbecher, die Dichtung und der Zellendeckel überlappen. Bei vorgegebenen Außendimensionen geht dies zwingend mit einer Beschränkung des verfügbaren Innenvolumens für die elektrochemisch aktiven Komponenten der Zelle einher.

Weiterhin sind Knopfzellen bekannt, bei denen ein Pol der Zelle durch den Deckel eines Gehäuses geführt ist. Beispielsweise beschreiben die EP 3813171 A1 und die CN 106159350 A Knopfzellen, bei der eine Deckelplatte und das übrige metallische Gehäuse der Knopfzelle die gleiche Polarität aufweisen. Auf der Außenseite der Deckelplatte ist ein Abgriffspol angeordnet, der die Deckelplatte überragt und mittels eines Isoliermittels gegenüber der Deckelplatte elektrisch isoliert ist. Eine der Elektroden ist mit dem Metallgehäuse und die andere Elektrode ist mit dem Abgriffspol elektrisch kontaktiert.

Die EP 3920297 A1 beschreibt ebenfalls eine Knopfzelle mit einem Metallgehäuse und einer Poldurchführung. Der Pol wird von einem scheibenartigen Element gebildet, das außen auf einer Deckelplatte aufsitzt und eine Durchbrechung in der Deckelplatte verschließt. Gegenüber der Deckelplatte ist es mittels eines Isoliermittels elektrisch getrennt.

### AUFGABE UND LÖSUNG

Demgegenüber stellt sich die Erfindung die Aufgabe, ein Energiespeicherelement und insbesondere eine Knopfzelle mit einer einfachen Bauart und einer besonders hohen Energiedichte bereitzustellen. Weiterhin soll dieses Energiespeicherelement in einfacher Weise an unterschiedliche Geometrien des Energiespeicherelements, beispielsweise im Hinblick auf unterschiedliche Ausbildungen der elektrochemisch aktiven Innenkomponenten des Energiespeicherelements und insbesondere auch im Hinblick auf die Anordnung der von außen abgreifbaren Pole des Energiespeicherelements, anpassbar sein.

Diese Aufgabe wird durch ein elektrochemisches Energiespeicherelement mit den Merkmalen des Anspruchs 1 gelöst. Vorteilhafte Ausgestaltungen des Energiespeicherelements ergeben sich aus den von Anspruch 1 abhängigen Ansprüchen. Weiterhin wird diese Aufgabe durch ein Verfahren zur Herstellung eines solchen Energiespeicherelements gemäß dem Anspruch 11 gelöst. Vorteilhafte Ausgestaltungen des Herstellungsverfahrens ergeben sich aus den weiteren abhängigen Ansprüchen.

Das erfindungsgemäße elektrochemisches Energiespeicherelement ist besonders bevorzugt in Form einer Knopfzelle ausgebildet, weist also eine zylindrische Bauform und eine Höhe, die kleiner als ihr Durchmesser ist, auf. In bevorzugten Ausführungsformen als Knopfzelle weist es einen Durchmesser von maximal 3 cm und eine Höhe von maximal 2,9 cm auf. Besonders bevorzugt betragen der Gehäusedurchmesser und die Höhe des Gehäuses in dieser Ausführungsform jeweils weniger als 2 cm. Weiterhin ist bevorzugt, dass erfindungsgemäße Energiespeicherelemente in Form einer Knopfzelle eine maximale Nennkapazität von maximal 1500 mAh aufweisen. Bevorzugt liegt die Nennkapazität im Bereich von 100 mAh bis 1000 mAh, besonders bevorzugt im Bereich von 100 bis 800 mAh.

In anderen bevorzugten Ausführungsformen weist das erfindungsgemäße elektrochemische Energiespeicherelement eine zylindrische Bauform und eine Höhe, die größer als ihr Durchmesser ist, sowie eine maximale Nennkapazität von ≤ 1500 mAh, auf. Ein solches Energiespeicherelement kann beispielsweise einen Durchmesser von 1 cm und eine Höhe von 1,5 cm aufweisen. In aller Regel liegt sein Durchmesser < 1,5 cm und seine maximale Höhe beträgt bevorzugt < 2 cm.

Energiespeicherelemente mit einer Nennkapazität ≤ 1500 mAh, werden vorliegend als Miniaturzellen bezeichnet.

In weiteren Ausführungsformen kann das erfindungsgemäße elektrochemische Energiespeicherelement als zylindrische Rundzelle mit einer Kapazität > 2000 mAh ausgebildet sein. Die Nennkapazität einer als Lithium-Ionen-Zelle ausgebildeten erfindungsgemäßen zylindrischen Rundzelle kann beispielsweise bis zu 90000 mAh betragen. Mit dem Formfaktor von 21 x 70 kann die Zelle in einer Ausführungsform als Lithium-Ionen-Zelle beispielsweise eine Nennkapazität im Bereich von 3000 mAh bis 7000 mAh aufweisen. Mit dem Formfaktor von 18 x 65 hat die Zelle in einer Ausführungsform als Lithium-Ionen-Zelle bevorzugt eine Nennkapazität im Bereich von 2500 bis 5000 mAh.

Das Gehäuse eines erfindungsgemäßen Energiespeicherelements umschließt einen Innenraum, in dem mindestens ein Elektroden-Separator-Verbund angeordnet ist. Dieser Elektroden-Separator-Verbund kann beispielsweise in Form eines Wickels oder eines Stapels ausgebildet sein.

Das erfindungsgemäße elektrochemische Energiespeicherelement zeichnet sich durch die folgenden Merkmale a. bis c. aus:
a. Das Gehäuse umfasst ein becherförmiges Gehäuseteil mit einem Boden, einer umlaufenden Seitenwand und einer Öffnung, sowie ein Deckelteil, das die Öffnung verschließt;
b. der Boden des becherförmigen Gehäuseteils umfasst
   - eine Bodenplatte,
   - eine Durchbrechung in der Bodenplatte und
   - eine metallische Polscheibe, die in der Durchbrechung fixiert ist;
c. zwischen der Polscheibe und der Bodenplatte befindet sich ein die Polscheibe umlaufender Spalt, der mit einem elektrisch isolierenden Material ausgefüllt ist.

Gegenüber den aus dem Stand der Technik bekannten Lösungen zeichnet sich das erfindungsgemäße elektrochemische Energiespeicherelement dadurch aus, dass ein Pol in Form der Polscheibe im Boden des becherförmigen Gehäuseteils angeordnet ist. Der eingangs genannte Stand der Technik kennt nur in ein Deckelteil integrierte Poldurchführungen. Dies ist vorteilhaft, da die umlaufende Seitenwand den Boden des becherförmigen Gehäuseteils mechanisch stabilisiert, was sowohl beim Fixieren der Polscheibe in der Durchbrechung und auch bei Schweißvorgängen von Vorteil sein kann. Dies gilt umso mehr, als es im Hinblick auf die Energiedichte des Energiespeicherelements vorteilhaft ist, Gehäuseteile möglichst dünn zu fertigen. Dünne Polscheiben können leicht mechanisch deformiert werden oder sich in Folge thermischer Belastungen beim Schweißen verziehen.

In bevorzugten Ausführungsformen des erfindungsgemäßen elektrochemischen Energiespeicherelements zeichnet sich dieses durch mindestens eines der folgenden zusätzlichen Merkmale a. bis d. aus:
a. Die Bodenplatte des becherförmigen Gehäuseteils weist eine Dicke im Bereich von 50 µm bis 1000 µm, vorzugsweise im Bereich von 50 µm bis 500 µm, besonders bevorzugt im Bereich von 100 µm bis 300 µm, auf.
b. Die Polscheibe weist eine Dicke im Bereich von 50 µm bis 1000 µm, vorzugsweise im Bereich von 50 µm bis 500 µm, besonders bevorzugt im Bereich von 100 µm bis 300 µm, auf.
c. Die Seitenwand des becherförmigen Gehäuseteils weist eine Dicke im Bereich von 50 µm bis 1000 µm, vorzugsweise im Bereich von 50 µm bis 500 µm, besonders bevorzugt im Bereich von 100 µm bis 300 µm, auf.
d. Das Deckelteil des becherförmigen Gehäuseteils weist Dicke im Bereich von 50 µm bis 1000 µm, vorzugsweise im Bereich von 50 µm bis 500 µm, besonders bevorzugt im Bereich von 100 µm bis 300 µm, auf.

Bevorzugt sind die Merkmale a. bis d. in Kombination realisiert.

Das Deckelteil kann sehr dünn ausgebildet werden, da es ja keinen Belastungen in Folge der Anwesenheit einer Poldurchführung ausgesetzt ist. Die Erfindung kann entsprechend Gehäuse mit optimiertem Innenvolumen bereitstellen. Dieses größere Innenvolumen kann für mehr elektrochemisch aktives Material genutzt werden. Beispielsweise kann ein größerer Elektroden-Separator-Verbund in dem Gehäuse platziert werden.

Der Boden des becherförmigen Gehäuseteils weist eine in den Innenraum weisende Innenseite und eine Außenseite auf.

In bevorzugten Ausführungsformen weisen die Bodenplatte mit der Durchbrechung und die metallische Polscheibe die gleiche Dicke auf. Es ist weiterhin bevorzugt, dass die Bodenplatte, die Polscheibe und das elektrisch isolierende Material in dem Spalt zwischen der Polscheibe und der Bodenplatte auf der die Außenseite des Bodens eine ebene Fläche, bevorzugt ohne Kanten und/oder Vorsprünge an den Grenzen zwischen der Bodenplatte und dem elektrisch isolierenden Material sowie dem elektrisch isolierenden Material und der Polscheibe, bilden.

Weiterhin kann es bevorzugt sein, dass die Bodenplatte, die Polscheibe und das elektrisch isolierende Material in dem Spalt zwischen der Polscheibe und der Bodenplatte auf der in den Innenraum weisenden Innenseite des Bodens eine ebene Fläche, bevorzugt ohne Kanten und/oder Vorsprünge an den Grenzen zwischen der Bodenplatte und dem elektrisch isolierenden Material sowie dem elektrisch isolierenden Material und der Polscheibe, bilden.

Besonders bevorzugt weisen die Bodenplatte mit der Durchbrechung und die metallische Polscheibe und der mit dem elektrisch isolierenden Material befüllte Spalt die gleiche Dicke auf.

Durch diese Maßnahmen wird das zur Verfügung stehende Volumen des Innenraums des Gehäuses maximiert.

Die Durchbrechung in der Bodenplatte, in der die Polscheibe fixiert ist, befindet sich vorzugsweise im Zentrum der Bodenplatte. Es ist jedoch auch möglich, dass die Durchbrechung dezentral in der Bodenplatte angeordnet ist.

In bevorzugten Ausführungsformen des erfindungsgemäßen elektrochemischen Energiespeicherelements zeichnet sich dieses durch das folgende zusätzliche Merkmal a. aus:
a. Das elektrisch isolierende Material basiert auf einem Polymermaterial.

Bei dem Polymermaterial kann es sich beispielsweise um ein thermoplastisches Polymermaterial handeln. Beispielsweise kann ein O-Ring aus einem Thermoplasten in den Spalt zwischen der Polscheibe und der Bodenplatte eingepresst werden. Das thermoplastische Material sollte hierbei resistent gegenüber einem gegebenenfalls zum Einsatz kommenden Elektrolyten sein.

Weiterhin kann es sich bei dem Polymermaterial um eine gehärtete Klebstoffmasse handeln. Im Hinblick auf den Klebstoff in dem Spalt zwischen der Bodenplatte und der Polscheibe zeichnet sich das erfindungsgemäße Energiespeicherelement in bevorzugten Ausführungsformen insbesondere durch mindestens eines der folgenden zusätzlichen Merkmale aus:
a. Der Klebstoff ist ein Epoxidharz.
b. Der Klebstoff ist ein Acrylatkleber.
c. Der Klebstoff ist ein Cyanacrylatkleber.
d. Der Klebstoff ist ein Zweikomponentenkleber.

Prinzipiell eignen sich alle Klebstoffe, die eine ausreichende Haftung zu der Polscheibe und der Bodenplatte aufweisen. Bevorzugt besitzt der Klebstoff geeignete abdichtende und elektrisch isolierende Eigenschaften, um die Dichtigkeit des Gehäuses sicherzustellen und um im Bedarfsfall die Polscheibe gegenüber dem übrigen Gehäuse elektrisch zu isolieren. Darüber hinaus ist der Klebstoff bevorzugt chemisch beständig gegenüber üblichen Elektrolytlösungen. Der Klebstoff kann ein thermisch härtender Klebstoff sein. Er kann aber - zusätzlich oder alternativ - auch durch Strahlung, beispielsweise UV-Strahlung, härtbare Bestandteile enthalten. Weiterhin kann es sich bei dem Kleber auch um einen Schmelzkleber handeln.

Besonders bevorzugt weist der Klebstoff eine Feuchtigkeitspermeation ähnlich oder besser der eines Polypropylen-Materials auf.

Eine elektrische Isolierung der Polscheibe gegenüber dem übrigen Gehäuse und insbesondere gegenüber der Bodenplatte kann vorzugsweise durch den ausgehärteten Klebstoff, mit dem die Polscheibe in der Durchbrechung der Bodenplatte fixiert ist, erreicht werden. Der Klebstoff erfüllt dann zum einen eine Befestigungsfunktion und zum anderen eine elektrische isolierende Funktion. Darüber hinaus hat der Klebstoff auch eine abdichtende Funktion. Das Gehäuse des erfindungsgemäßen Energiespeicherelements ist bevorzugt flüssigkeitsdicht ausgebildet.

Das becherförmige Gehäuseteil und das Deckelteil sind bevorzugt über eine Verschweißung entlang dem Rand des Deckelteils miteinander verbunden.

Das Deckelteil und das becherförmige Gehäuseteil sind bevorzugt jeweils aus einem metallischen Werkstoff, beispielsweise aus Aluminium oder aus vernickeltem Stahl, gebildet. Beide Gehäuseteile weisen bevorzugt die gleiche Polarität auf.

Die Polscheibe besteht bevorzugt ebenfalls aus einem metallischen Werkstoff, bei dem es sich nicht um den gleichen Werkstoff handeln muss wie im Fall des Deckelteils und des becherförmigen Gehäuseteils. Beispielsweise kann die Polscheibe aus Kupfer bestehen.

Die Polscheibe kann also beispielsweise negativ gepolt sein, während das Deckelteil und das becherförmige Gehäuseteil einschließlich der Bodenplatte positiv gepolt sind. Dies hat den besonderen Vorteil, dass es hierdurch möglich ist, beide Polaritäten der Zelle, also die Polarität, die an der Polscheibe anliegt, und die andere Polarität, die an dem Deckelteil und dem becherförmigen Gehäuseteil anliegt, auf einer Seite des Gehäuses, nämlich der Seite, wo sich der Boden des becherförmigen Gehäuseteils befindet, abzugreifen. Ein besonderer Vorteil des erfindungsgemäßen Energiespeicherelements liegt also insbesondere darin, dass bei einer sehr einfachen und wenig störanfälligen Gehäusekonstruktion beide Pole des Energiespeicherelements auf einer Stirnseite des Gehäuses abgegriffen werden können.

In einer ersten bevorzugten Ausführungsform zeichnet sich das erfindungsgemäße elektrochemische Energiespeicherelement durch mindestens eines der folgenden zusätzlichen Merkmale a. und b. aus:
a. Die Polscheibe weist einen kreisförmigen Rand auf.
b. Der Rand der Durchbrechung weist eine Kreisform auf.

Besonders bevorzugt sind die vorgenannten Merkmale a. und b. in Kombination miteinander realisiert, so dass die Form der Polscheibe und die Form der Durchbrechung einander entsprechen. Hierdurch kann ein umlaufender Spalt zwischen den beiden Gehäuseelementen realisiert werden, der über seinen gesamten Umfang eine gleichbleibende Breite aufweist.

Die Kreisform der Polscheibe und der Durchbrechung hat darüber hinaus den Vorteil, dass bei dem Einsetzen der Polscheibe in die Durchbrechung die Orientierung der Polscheibe keine Rolle spielt. Die Fertigung der becherförmigen Gehäuseteils ist daher in diesem Punkt vereinfacht.

In einer zweiten bevorzugten Ausführungsform zeichnet sich das erfindungsgemäße elektrochemische Energiespeicherelement durch mindestens eines der folgenden zusätzlichen Merkmale a. und b. aus:
a. Die Polscheibe weist einen Rand mit einer von einer Kreisform abweichende Form auf.
b. Der Rand der Durchbrechung weist eine von einer Kreisform abweichende Form auf.

Vorzugsweise sind die vorgenannten Merkmale a. und b. in Kombination miteinander verwirklicht.

Die metallische Polscheibe ist also in einigen bevorzugten Ausführungsformen als kreisförmige Scheibe ausgebildet.

In bevorzugten Ausführungsformen weist die metallische Polscheibe über ihre gesamte Fläche eine gleichmäßige Dicke auf. In anderen Ausführungsformen kann es vorgesehen sein, dass die Polscheibe in einem Bereich, der beispielsweise innenseitig und/oder außenseitig zur Verschweißung mit einem elektrischen Kontakt zu einer der Elektroden vorgesehen ist, etwas dicker als in den übrigen Bereichen ausgebildet ist oder auf sonstige Weise in diesem Bereich verstärkt ist.

In anderen Ausführungsformen weist die Polscheibe die erwähnte von der Kreisform abweichende Geometrie auf. Eine solche, von einer Kreisform abweichende Form kann beispielsweise realisiert sein, indem bei einer runden oder ovalen Grundform Vorsprünge oder Einbuchtungen vorgesehen sind. Eine bevorzugte von der Kreisform abweichende Form ist beispielsweise eine Sternform.

Besonders bevorzugt ist es, wenn die Polscheibe und die Durchbrechung einander entsprechende Formen aufweisen. Ein bevorzugtes Beispiel ist eine sternförmige Ausbildung sowohl der Polscheibe als auch der Durchbrechung.

Es ist aber auch möglich, dass die Durchbrechung kreisförmig ausgebildet ist und lediglich die Polscheibe eine von der Kreisform abweichende Geometrie aufweist. On diesem Fall weist der mit dem elektrisch isolierenden Material befüllte Spalt eine variierende Breite auf.

In einigen besonders bevorzugten Ausführungsformen sind an den Rändern der Polscheibe und/oder der Durchbrechung Einbuchtungen und/oder hinterschnittene Bereiche vorgesehen. Durch das Befüllen dieser Einbuchtungen und insbesondere der hinterschnittenen Bereiche beispielsweise mit besagtem Klebstoff kann eine besonders gute Fixierung der Polscheibe in der Durchbrechung erreicht werden.

Das Deckelteil ist bevorzugt als kreisrunde Scheibe ausgebildet. Seine Form und Größe wird bestimmt durch die Form und Dimension der Öffnung des becherförmigen Gehäusehalbteils.

Die Bodenplatte kann beispielsweise die Form einer Ringscheibe aufweisen. Sie reicht nach außen hin bis zu der umlaufenden Seitenwand, die bevorzugt mit dem Boden einen Winkel von 90° einschließt. Die Bodenplatte ist bevorzugt zumindest in weiten Teilen eben ausgebildet. In speziellen Fällen kann sie aber auch bereichsweise profiliert sein.

In besonders bevorzugten Ausführungsformen des Energiespeicherelements ist das folgende zusätzliche Merkmal vorgesehen:
a. Die Innenseite des Bodens des becherförmigen Gehäuseteils ist zumindest teilweise mit einer Folie abgeklebt.

Durch die Folie kann das elektrisch isolierende Material in dem Spalt die Polscheibe umlaufenden Spalt vor einem Kontakt mit einem Elektrolyten im Inneren des Energiespeicherelements geschützt werden.

In besonders vorteilhaften Ausgestaltungen kann vorzugsweise mindestens eines der folgenden zusätzlichen Merkmale vorgesehen sein:
a. Die Folie deckt den Rand der Durchbrechung, den Rand der Polscheibe und den dazwischen liegenden, mit dem elektrisch isolierenden Material befüllten Spalt ab, so dass das in dem Spalt zwischen dem Innenrand und dem Außenrand angeordnete Material vor einem Kontakt mit einem Elektrolyten im Inneren des Gehäuses geschützt ist.
b. Die Folie hat eine Ringform.

Vorzugsweise sind die vorgenannten Merkmale a. und b. in Kombination realisiert.

Bei der Folie kann es sich beispielsweise um eine Kaptonfolie handeln.

In bevorzugten Ausführungsformen des erfindungsgemäßen Energiespeicherelements zeichnet sich das Energiespeicherelement durch mindestens eines der folgenden zusätzlichen Merkmale aus:
a. Der Elektroden-Separator-Verbund umfasst mindestens eine Anode und mindestens eine Kathode, wobei die mindestens eine Anode oder die mindestens eine Kathode elektrisch mit der Polscheibe kontaktiert ist.
b. der Elektroden-Separator-Verbund ist ein gestapelter Elektroden-Separator-Verbund.
c. der Elektroden-Separator-Verbund ist ein gewickelter Elektroden-Separator-Verbund.
d. das elektrochemische Energiespeicherelement ist eine Lithium-Ionen-Zelle.
e. das elektrochemische Energiespeicherelement ist eine Natrium-lonen-Zelle.

Wenn die mindestens eine Anode elektrisch mit der Polscheibe verbunden ist, so ist die mindestens eine Kathode elektrisch mit einem anderen metallischen Teil des Gehäusebechers und/oder mit dem Deckelteil verbunden. Wenn die mindestens eine Kathode elektrisch mit der Polscheibe verbunden ist, so ist die mindestens eine Anode elektrisch mit einem anderen metallischen Teil des Gehäusebechers und/oder dem Deckelteil verbunden.

Die erfindungsgemäße Ausgestaltung des Bodens des becherförmigen Gehäuseteils bzw. der entsprechenden Stirnseite des Gehäuses eignet sich für verschiedenste Arten von elektrochemischen Energiespeicherelementen. Als Elektroden-Separator-Verbund können daher beispielsweise sowohl gewickelte als auch gestapelte Elektroden-Separator-Verbünde eingesetzt werden.

Auch im Hinblick auf die Elektrochemie ist das erfindungsgemäße Energiespeicherelement nicht auf einen bestimmten Zelltyp beschränkt. In besonders bevorzugten Ausgestaltungen handelt es sich bei der Energiespeicherelement um eine Lithium-Ionen-Zelle, da solche Zellen eine besonders große Energiedichte bei vergleichsweise niedrigem Gewicht bereitstellen können.

Bevorzugt umfasst das erfindungsgemäße Energiespeicherelement als negative und positive Elektrode sogenannten Kompositelektroden, die neben elektrochemisch aktiven Komponenten auch elektrochemisch inaktive Komponenten umfassen.

Als elektrochemisch aktive Komponenten (Aktivmaterialien) beispielsweise für Lithium-Ionen-Energiespeicherelemente kommen prinzipiell sämtliche Materialien in Frage, die Lithium-Ionen aufnehmen und wieder abgeben können. Für die negative Elektrode werden beispielsweise Partikel auf Kohlenstoffbasis, wie beispielsweise graphitischer Kohlenstoff, eingesetzt. Als Aktivmaterialien für die positive Elektrode können beispielsweise Lithiumcobaltoxid (LiCoOz), Lithiummanganoxid (LiMn₂O₄), Lithiumeisenphosphat (LiFePO₄) oder Derivate hiervon eingesetzt werden. Die elektrochemisch aktiven Materialien sind in der Regel in Partikelform in den Elektroden enthalten.

Die Aktivmaterialien sind in der Regel Bestandteil einer Mixtur, die als Schicht auf einem bandförmige Stromkollektor aufgebracht ist. Der Stromkollektor stellt dabei eine elektrochemisch inaktive Komponente des Energiespeicherelements dar. Als Stromkollektoren sind insbesondere metallische Folien geeignet, die als Träger für das jeweilige Aktivmaterial dienen. Der Stromkollektor für die negative Elektrode (Anodenstromkollektor) kann beispielsweise aus Kupfer oder Nickel und der Stromkollektor für die positive Elektrode (Kathodenstromkollektor) beispielsweise aus Aluminium gebildet sein. Die Schicht umfasst als elektrochemisch inaktive Komponenten einen Elektrodenbinder (z. B. Polyvinylidenfluorid (PVDF) oder ein anderes Polymer, beispielsweise Carboxymethylzellulose), leitfähigkeitsverbessernde Additive und andere Zusätze. Der Elektrodenbinder gewährleistet die mechanische Stabilität der Elektroden und sorgt häufig auch für die Haftung des Aktivmaterials auf den Stromkollektoren.

Als Elektrolyten für ein Energiespeicherelement auf Lithium-Ionen-Basis eignen sich vor allem Lösungen von Lithiumsalzen wie Lithiumhexafluorophosphat (LiPF₆) in organischen Lösungsmitteln (z. B. Ether und Ester der Kohlensäure).

Wenn die Elektroden in Form eines Wickels oder eines Stapels bereitgestellt werden, ist zwischen benachbarten Elektroden bevorzugt mindestens ein Separator angeordnet.

In weiteren Ausführungsformen kann es sich bei dem Energiespeicherelement auch um eine Natrium-Ionen-Zelle oder eine Kalium-Ionen-Zelle, eine Calzium-Ionen-Zelle, eine Magnesium-lonen-Zelle oder eine Aluminium-Ionen-Zelle handeln. Unter diesen Varianten sind Energiespeicherelemente mit Natrium-Ionen-Zellchemie besonders bevorzugt.

Die Erfindung umfasst weiterhin ein Verfahren zur Herstellung des beschriebenen elektrochemischen Energiespeicherelements. Dieses Verfahren umfasst zumindest die folgenden Verfahrensschritte:
a. Es werden ein becherförmiges Gehäuseteil mit einem Boden, einer umlaufenden Seitenwand und einer Öffnung, sowie ein Deckelteil für das Gehäuse des elektrochemischen Energiespeicherelements bereitgestellt.
b. Zur Bereitstellung des Gehäuseteils wird eine Polscheibe in einer Durchbrechung im Boden des Gehäuseteils fixiert, so dass ein elektrisch isolierendes Material einen Spalt zwischen der Polscheibe und dem Rand der Durchbrechung ausfüllt.
c. In das becherförmige Gehäuseteil wird mindestens ein Elektroden-Separator-Verbund eingebracht.
d. Eine der Elektroden des Elektroden-Separator-Verbunds wird elektrisch mit dem Deckelteil und/oder dem Gehäusebecher außerhalb des Bereichs der Polscheibe und die andere der Elektroden wird elektrisch mit der Polscheibe kontaktiert.
e. Vor oder nach der elektrischen Kontaktierung der Elektroden wird die Öffnung des becherförmigen Gehäuseteils mit dem Deckelteil verschlossen.

Bevorzugt wird das becherförmige Gehäuseteil durch ein Tiefziehverfahren gebildet, insbesondere aus Nickel, Stahl, Aluminium oder einem Kompositmaterial umfassend mehrere Schichten aus unterschiedlichen metallischen Materialien. Die Durchbrechung im Boden kann beispielsweise durch einen Stanzvorgang gebildet werden.

Bei der Elektrode, die mit der Polscheibe kontaktiert wird, kann es sich beispielsweise um die Kathode handeln. Dementsprechend wird die Anode mit einem anderen metallischen Teil des Gehäusebechers und/oder dem Deckelteil verbunden. In entsprechender Weise kann auch die Anode mit der Polscheibe und die Kathode mit dem anderen metallischen Teil des Gehäusebechers und/oder dem Deckelteil elektrisch kontaktiert sein.

Bei dem elektrisch isolierenden Material handelt es sich vorzugsweise um einen Klebstoff, insbesondere einen thermoplastischen Klebstoff. Der Klebestoff kann beispielsweise in dem zwischen der Polscheibe und der Bodenplatte gebildeten Spalt eingespritzt werden. Nach dem Erhärten bildet der Klebstoff eine stabile, dichte und vorzugsweise elektrisch isolierende Verbindung zwischen der Polscheibe und der Bodenplatte.

Für die Funktion des Energiespeicherelements ist es wichtig, dass die metallische Oberfläche der Polscheibe von innen und außen zugänglich ist, so dass der Kontakt mit der jeweiligen Elektrode und/oder einem außen am Boden anliegenden elektrischen Kontakt hergestellt werden kann. Um eine Abdeckung der Polscheibe beispielsweise durch überschüssigen Klebstoff zu vermeiden, kann im Rahmen der Fertigung die Polscheibe während der Verklebung beispielsweise bereichsweise abgedeckt werden. Alternativ oder zusätzlich kann überschüssiger Klebstoff nachträglich beispielsweise abgeschliffen oder auf andere Weise entfernt werden.

Das Verschließen der Öffnung des becherförmigen Gehäuseteils mit dem Deckelteil kann bevorzugt durch Verschweißen erfolgen, insbesondere durch Laser-Schweißen oder durch Widerstandsschweißen. Gegebenenfalls kann hierfür aber auch eine Verklebung vorgesehen sein.

In bevorzugten Ausführungsformen des erfindungsgemäßen Verfahrens zeichnet sich das Verfahren durch mindestens eines der folgenden zusätzlichen Merkmale aus:
a. Das Verschließen der Öffnung des becherförmigen Gehäuseteils mit dem Deckelteil erfolgt durch Verschweißen, insbesondere durch Laser-Schweißen.
a. Der Elektroden-Separator-Verbund wird mit einem Elektrolyten versetzt.

Bei der Herstellung der erfindungsgemäßen Energiespeicherelemente wird in der Regel entweder ein bereits mit einem Elektrolyten versehener Elektroden-Separator-Verbund verwendet, oder der Elektroden-Separator-Verbund wird im weiteren Verlauf der Herstellung mit einem Elektrolyten versetzt. Hierfür kann beispielsweise im Boden des becherförmigen Gehäuseteils oder im Deckelteil eine zusätzlich Öffnung (Aktivierungsöffnung) vorgesehen sein, über die der Elektrolyt in das Innere des Gehäuses eingebracht wird. Nach dem Einbringen kann die Aktivierungsöffnung verschlossen werden, beispielsweise durch Kleben oder Schweißen.

Bei dem Material für das Deckelteil und die metallischen Teile des Gehäusebechers, abgesehen von der Polscheibe, handelt es sich besonders bevorzugt um Aluminium oder um eine Aluminiumlegierung. In anderen Ausführungsformen können beispielsweise vernickelter Stahl oder Edelstahl für das Deckelteil und die metallischen Elemente des becherförmigen Gehäuseteils verwendet werden. Die Polscheibe besteht besonders bevorzugt aus Edelstahl, Kupfer oder Nickel.

Das Deckelteil hat beispielsweise einen Durchmesser im Bereich von 5 mm bis 35 mm. Der Spalt zwischen der Polscheibe und dem Innenrand der Bodenplatte kann beispielsweise eine Breite im Bereich von 0,1 mm - 1mm aufweisen.

Weitere Merkmale und Vorteile der Erfindung ergeben sich aus der nachfolgenden Beschreibung von bevorzugten Ausführungsbeispielen in Verbindung mit den Zeichnungen. Hierbei können die einzelnen Merkmale jeweils für sich oder in Kombination miteinander realisiert sein.

In den Figuren zeigen:
- Fig. 1: schematische Schnittansicht einer bevorzugten Ausführungsform des Gehäuses eines erfindungsgemäßen Energiespeicherelements;
- Fig. 2: schematische Schnittansicht einer bevorzugten Ausführungsform eines erfindungsgemäßen Energiespeicherelements; und
- Fig. 3: Darstellung einer Aufsicht einer möglichen Ausführungsform des Bodens eines erfindungsgemäßen Energiespeicherelements.

### BESCHREIBUNG VON BEVORZUGTEN AUSFÜHRUNGSBEISPIELEN

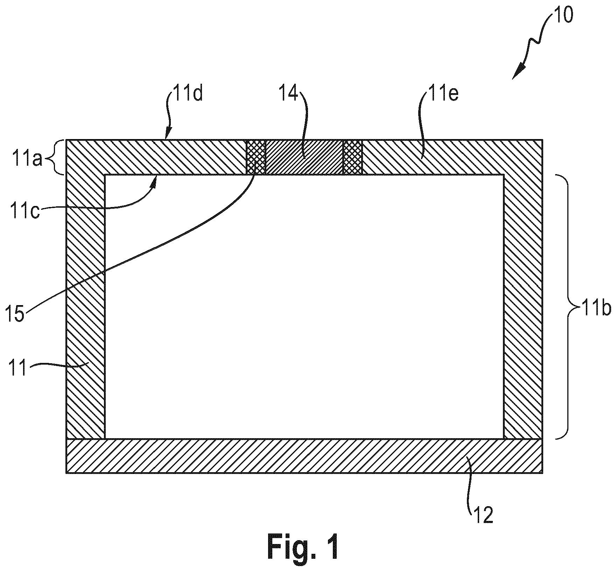

**Fig. 1** illustriert den prinzipiellen Aufbau einer bevorzugten Ausführungsform eines Gehäuses 10 eines erfindungsgemäßen Energiespeicherelements. In dieser Darstellung ist nur das Gehäuse 10 des Energiespeicherelements gezeigt, die Elektroden und weitere im Gehäuseinnern angeordnete funktionale Bestandteile sind nicht dargestellt.

Das Gehäuse 10 ist aus einem becherförmigen Gehäuseteil 11 und einem Deckelteil 12 aufgebaut. Das Deckelteil 12, das beispielsweise aus Aluminium bestehen kann, verschließt die Öffnung des becherförmigen Gehäuseteils 11. Es kann beispielsweise auf den Rand der Öffnung aufgeschweißt sein. Erfindungsgemäß umfasst das becherförmige Gehäuseteil 11 einen Boden 11a mit einer scheibenförmigen Bodenplatte 11e und einer umlaufenden Seitenwand 11b, die beide ebenfalls aus Aluminium bestehen können. Die Bodenplatte 11e weist eine zentrale Durchbrechung auf. In dieser Durchbrechung ist die metallische Polscheibe 14, beispielsweise bestehend aus Edelstahl, Nickel oder Kupfer, eingelassen. Die Elemente des Bodens 11a, also insbesondere die Polscheibe 14 und die Bodenplatte 11e, sind in einer Ebene angeordnet. Die Dicke der Polscheibe 14 entspricht vorzugsweise der Dicke der Bodenplatte 11e.

Zur Fixierung der Polscheibe 14 in der Durchbrechung ist ein umlaufender, mit einem Klebstoff 15 befüllter Spalt vorgesehen. Neben einer fixierenden und abdichtenden Funktion erfüllt der Klebstoff 15 auch eine elektrisch isolierende Funktion, so dass die Polscheibe 14 gegenüber der Bodenplatte 11e elektrisch isoliert ist.

Die metallische Polscheibe 14 kann beispielsweise mit der negativen Elektrode des hier nicht dargestellten Elektroden-Separator-Verbunds im Inneren des Gehäuses elektrisch kontaktiert sein, beispielsweise durch Verschweißung mit einem elektrischen Leiter, der mit der negativen Elektrode verbunden ist. Die positive Elektrode kann beispielsweise mit der Bodenplatte 11e oder dem Deckelteil 12 elektrisch kontaktiert sein, wiederum insbesondere durch Verschwei-ßung.

Die erfindungsgemäße Ausbildung des Gehäuses 10 ist für ganz verschiedene Arten von Energiespeicherelementen einsetzbar, insbesondere können Elektroden-Separator-Verbünde in gestapelter oder zylindrischer oder flach gewickelter Form in dem Gehäuse 10 verbaut werden.

In besonders bevorzugter Weise wird diese Art des Gehäuses für Knopfzellen eingesetzt. In diesen Ausführungsformen weist das Gehäuse 10 in der Regel eine zylindrische Form auf und das Deckelteil 12 hat einen runden oder ovalen Außenumfang. Darüber hinaus ist die erfindungsgemäße Ausbildung des Gehäuses jedoch auch für andere Formen von Energiespeicherelementen einsetzbar, auch für solche mit prismatischem Gehäuse.

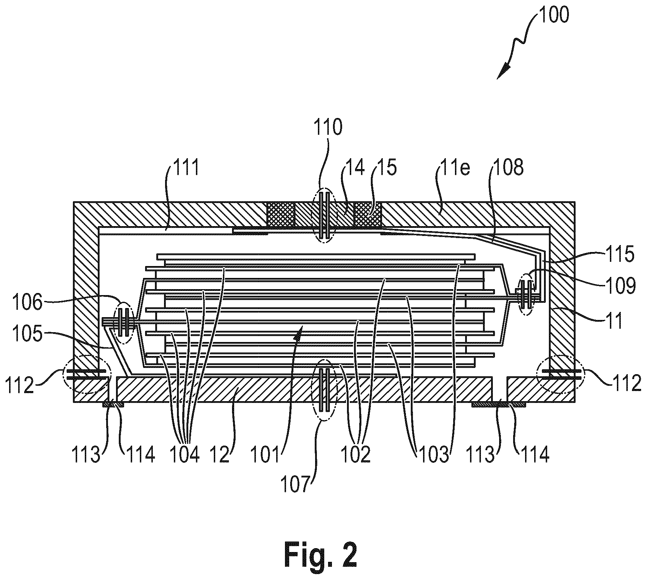

**Fig. 2** illustriert in schematischer Weise einen Querschnitt durch ein erfindungsgemäßes Energiespeicherelement 100, wobei dieses Energiespeicherelement mit einem gestapelten Elektroden-Separator-Verbund 101 ausgestattet ist. Das Gehäuse des Energiespeicherelements 100 ist aus einem becherförmigen Gehäuseteil 11 und einem Deckelteil 12 aufgebaut, wie es bereits anhand der Figur 1 erläutert wurde. Dabei umfasst das becherförmigen Gehäuseteil 11 eine scheibenförmige Bodenplatte 11e mit einer zentralen Öffnung, in die die metallische Polscheibe 14 eingelassen ist. Zwischen der Polscheibe 14 und dem Innenrand der Bodenplatte 11e liegt ein Spalt, der mit Klebstoff 15 ausgefüllt ist. Bei dem Klebstoff kann es sich beispielsweise um Epoxidharz oder einen Acrylatkleber handeln.

Statt des hier gezeigten Elektroden-Separator-Verbunds 101 in Form eines Stapels kann der Elektroden-Separator-Verbund beispielsweise auch als zylindrischer Wickel oder als Flachwickel realisiert sein.

Der Stapel wird von den Anoden 103 und Kathoden 102 gebildet, die übereinandergestapelt und jeweils mit flächigen Separatoren 104 voneinander getrennt sind. Die Elektroden 102, 103 werden jeweils von einer Trägerfolie (Stromkollektorfolie) und einer Beschichtung mit einem elektrochemisch aktiven Material gebildet. Sie können im Fall einer Knopfzelle beispielsweise kreisförmig ausgebildet sein.

Als Trägerfolie für die Anoden 103 wird beispielsweise Kupfer- oder Nickelfolie verwendet. Als elektrochemisch aktives Material kann beispielsweise ein Aktivmaterial auf der Basis von Graphit, Silizium (Si), Lithiumtitaniumoxid (LTO) oder anderem eingesetzt werden. Die Trägerfolie für die Kathode 102 ist beispielsweise aus Aluminium gebildet und als Aktivmaterial für die Kathode können beispielsweise Lithium-Nickel-Mangan-Cobalt-Oxide (NMC), Lithium-Cobalt-Oxide (LCO), Lithium-Nickel-Cobalt-Aluminium-Oxide (NCA), Lithiumeisenphosphate (LFP) oder anderes verwendet werden.

Nach der Stapelung der Elektroden 102 und 103 mit den dazwischen liegenden Separatoren 104 können beispielsweise unbeschichtete streifenförmige Fortsätze der Stromkollektorfolien der Anoden 103 miteinander verschweißt werden (beispielsweise über Widerstandsschweißen, Ultraschall oder Laser). Die Fortsätze können mit einem Anodenableiter 108 verschweißt werden, beispielsweise durch Widerstandschweißen, Ultraschall oder Laser (Verschweißung 109). Die beiden Verschweißungsschritte können auch in einem Schritt zusammengefasst werden.

Der Anodenableiter 108 wiederum kann mittels Widerstandsschweißen, Ultraschall oder Laser an die Polscheibe 14 geschweißt werden (Verschweißung 110).

Auf die gleiche Weise können unbeschichtete streifenförmige Fortsätze der Stromkollektorfolien der Kathoden 102 miteinander und mit einem Kathodenableiter 105 verschweißt werden (Verschweißung 106). Die Verschweißung der Kathodenstromkollektoren untereinander und die Verschweißung mit dem Kathodenableiter 105 kann ebenfalls sequentiell oder in einem Schritt erfolgen.

Der Kathodenableiter 105 wird von innen an das Deckelteil 12 geschweißt (Verschweißung 107), wobei diese Verschweißung beispielsweise durch Widerstandsschweißen, Ultraschall oder Laser von innen oder von außen erfolgen kann.

Zur Vermeidung von Kurzschlüssen ist die Innenseite der Bodenplatte 11e mit einer Isolierscheibe 111 abgedeckt. Weiterhin ist der Anodenableiter 108 zur elektrischen Isolierung gegenüber dem Gehäuse mit einem Isoliermittel 115, z. B. einer Isolierfolie, versehen.

Das becherförmige Gehäuseteil 11 ist im Bereich seiner Öffnung mit dem Deckelteil 12 verschweißt (Verschweißung 112). Dies erfolgt vorzugsweise durch Laserstrahlung, die horizontal und/oder vertikal angesetzt werden kann.

Über die Aktivierungslöcher 113 im Deckelteil 12 kann das Innere des Gehäuses des Energiespeicherelements 100 mit einem Elektrolyten befüllt werden. Anschließend können die Aktivierungslöcher 113 beispielsweise mit einer Abdeckscheibe 114 oder Ähnlichem verschlossen werden. Der Verschluss kann beispielsweise mittels Kleben oder Schweißen (Ultraschall, Widerstand oder Laser) realisiert werden.

Aus der hier beschriebenen Anordnung und Kontaktierung der Elektroden resultiert ein Energiespeicherelement 100, bei dem die Bodenplatte 11e und das Deckelteil 12 positiv gepolt sind und die Polscheibe 14 negativ gepolt ist.

Je nach Anordnung und Verschaltung der Elektroden kann die Polarität auch umgekehrt sein.

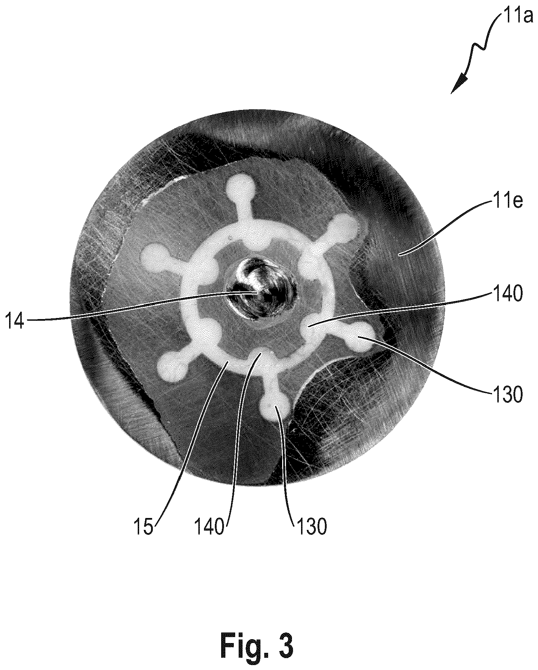

**Fig. 3** zeigt eine mögliche Ausführungsform eines Bodens 11a eines becherförmigen Gehäuseteils 11 eines Energiespeicherelements gemäß der Erfindung. Der Boden 11a wird von einer scheibenförmigen Bodenplatte 11e sowie der metallischen Polscheibe 14, die über eine Klebstoffverbindung (mit ausgehärtetem Klebstoff 15 gefüllter Spalt) in einer Durchbrechung in der Bodenplatte 11e fixiert ist, gebildet.

In diesem Ausführungsbeispiel sind weder die Polscheibe 14 noch die Durchbrechung in der Bodenplatte 11e kreisförmig ausgebildet. Stattdessen sind Einbuchtungen 140 und hinterschnittene Bereiche 130 vorhanden, die die Haftung des Klebstoffs 15 und die mechanische Verbindung zwischen der Polscheibe 14 und der Bodenplatte 11e verbessern.

Bei der Polscheibe 14 sind halbkreisförmige Einbuchtungen 140 im Bereich des Außenrandes der Polscheibe 14 vorgesehen. Bei der Durchbrechung sind hinterschnittene Einbuchtungen 130 vorgesehen. Die hinterschnittenen Einbuchtungen 130 werden von kreisförmigen Bereichen gebildet, die über einen schmalen Steg in die zentrale Durchbrechung der Bodenplatte 11e münden. Die Bereiche 130 und 140 erlauben eine besonders stabile Klebeverbindung zwischen der Bodenplatte 11e und der Polscheibe 14.

In anderen möglichen Ausführungsformen können die Polscheibe 14 und die Durchbrechung beispielsweise jeweils einen kreisförmigen Rand aufweisen. Diese Ausgestaltung des Bodens 11e ist insbesondere im Hinblick auf eine vereinfachte Fertigung vorteilhaft.

Um die metallische Oberfläche der Polscheibe 14 für eine elektrische Kontaktierung von außen frei zugänglich zu machen, kann es gegebenenfalls erforderlich sein, im Zuge der Herstellung des becherförmigen Gehäuseteils 11 Klebstoff von der Oberfläche der Polscheibe 14 zu entfernen, beispielsweise durch einen Schleifprozess. Eine andere Möglichkeit ist eine Abdeckung der Polscheibe 14 oder von Teilen der Polscheibe 14 während des Klebeprozesses, so dass die metallische Oberfläche der Polscheibe 14 nicht mit Klebstoff benetzt wird.

## Patentansprüche

1. Elektrochemisches Energiespeicherelement (100), insbesondere in Form einer Knopfzelle, mit einem Gehäuse (10) und mit mindestens einem innerhalb des Gehäuses angeordneten Elektroden-Separator-Verbund (101), wobei das elektrochemische Energiespeicherelement die folgenden Merkmale aufweist:
a. Das Gehäuse (10) umfasst ein becherförmiges Gehäuseteil (11) mit einem Boden (11a), einer umlaufenden Seitenwand (11b) und einer Öffnung, sowie ein Deckelteil (12), das die Öffnung verschließt;
b. der Boden (11a) des becherförmigen Gehäuseteils (11) weist eine Innenseite (11c) und eine Außenseite (11d) auf und umfasst
- eine Bodenplatte (11e),
- eine Durchbrechung in der Bodenplatte (11e) und
- eine metallische Polscheibe (14), die in der Durchbrechung fixiert ist;
c. zwischen der Polscheibe (14) und der Bodenplatte (11e) befindet sich ein die Polscheibe (14) umlaufender Spalt, der mit einem elektrisch isolierenden Material (15) ausgefüllt ist.

2. Elektrochemisches Energiespeicherelement nach einem der vorhergehenden Ansprüche mit dem folgenden zusätzlichen Merkmal:
a. Die Bodenplatte (11e), die Polscheibe (14) und das elektrisch isolierende Material (15) in dem Spalt zwischen der Polscheibe (14) und der Bodenplatte (11e) bilden auf der Außenseite (11d) des Bodens (11a) eine ebene Fläche.

3. Elektrochemisches Energiespeicherelement nach einem der vorhergehenden Ansprüche mit dem folgenden zusätzlichen Merkmal:
a. Die Bodenplatte (11e), die Polscheibe (14) und das elektrisch isolierende Material (15) in dem Spalt zwischen der Polscheibe (14) und der Bodenplatte (11e) bilden auf der Innenseite (11c) des Bodens (11a) eine ebene Fläche.

4. Elektrochemisches Energiespeicherelement nach einem der vorhergehenden Ansprüche mit dem folgenden zusätzlichen Merkmal:
a. Das elektrisch isolierende Material (15) basiert auf einem Polymermaterial.

5. Elektrochemisches Energiespeicherelement nach einem der vorhergehenden Ansprüche mit mindestens einem der folgenden zusätzlichen Merkmale:
a. Das elektrisch isolierende Material ist ein gehärtetes Epoxidharz.
b. Das elektrisch isolierende Material ist ein gehärteter Acrylatkleber.
c. Das elektrisch isolierende Material ist ein gehärteter Cyanacrylatkleber.
d. Das elektrisch isolierende Material ist ein gehärteter Zweikomponentenkleber.

6. Elektrochemisches Energiespeicherelement nach einem der vorhergehenden Ansprüche mit mindestens einem der folgenden zusätzlichen Merkmale:
a. Die Polscheibe (14) weist einen kreisförmigen Rand auf.
b. Der Rand der Durchbrechung weist eine Kreisform auf.

7. Elektrochemisches Energiespeicherelement nach einem der vorhergehenden Ansprüche, insbesondere nach Anspruch 1 oder Anspruch 2, mit mindestens einem der folgenden zusätzlichen Merkmale:
a. Die Polscheibe (14) weist einen Rand mit einer von einer Kreisform abweichende Form auf.
b. Der Rand der Durchbrechung weist eine von einer Kreisform abweichende Form auf.

8. Elektrochemisches Energiespeicherelement nach einem der vorhergehenden Ansprüche mit dem folgenden zusätzlichen Merkmal:
a. Die Innenseite (11c) des Bodens (11a) des becherförmigen Gehäuseteils (11) ist zumindest teilweise mit einer Folie abgeklebt.

9. Elektrochemische Energiespeicherelement nach Anspruch 8 mit mindestens einem der folgenden zusätzlichen Merkmale:
a. Die Folie deckt den Rand der Durchbrechung, den Rand der Polscheibe (14) und den dazwischen liegenden, mit dem elektrisch isolierenden Material (15) befüllten Spalt ab, so dass das in dem Spalt zwischen dem Innenrand und dem Außenrand angeordnete Material (15) vor einem Kontakt mit einem Elektrolyten im Inneren des Gehäuses (10) geschützt ist.
b. Die Folie hat eine Ringform.

10. Elektrochemisches Energiespeicherelement nach einem der vorhergehenden Ansprüche mit mindestens einem der folgenden zusätzlichen Merkmale:
a. Der Elektroden-Separator-Verbund (101) umfasst mindestens eine Anode (103) und mindestens eine Kathode (102), wobei die mindestens eine Anode (103) oder die mindestens eine Kathode (102) elektrisch mit der Polscheibe (14) kontaktiert ist.
b. Der Elektroden-Separator-Verbund (101) ist ein gestapelter Elektroden-Separator-Verbund.
c. Der Elektroden-Separator-Verbund ist ein gewickelter Elektroden-Separator-Verbund.
d. Das elektrochemische Energiespeicherelement (100) ist eine Lithium-Ionen-Zelle.
e. Das elektrochemische Energiespeicherelement (100) ist eine Natrium-lonen-Zelle.

11. Verfahren zur Herstellung eines elektrochemischen Energiespeicherelements (100), insbesondere in Form einer Knopfzelle, mit einem Gehäuse (10) und mit mindestens einem innerhalb des Gehäuses angeordneten Elektroden-Separator-Verbund (101, umfassend die folgenden Verfahrensschritte:
a. Es werden ein becherförmiges Gehäuseteil (11) mit einem Boden (11a), einer umlaufenden Seitenwand (11b) und einer Öffnung, sowie ein Deckelteil (12) für das Gehäuse (10) des elektrochemischen Energiespeicherelements (100) bereitgestellt.
b. Zur Bereitstellung des Gehäuseteils (11) wird eine Polscheibe (14) in einer Durchbrechung im Boden (11a) des Gehäuseteils (11) fixiert, so dass ein elektrisch isolierendes Material (15) einen Spalt zwischen der Polscheibe (14) und dem Rand der Durchbrechung ausfüllt.
c. In das becherförmige Gehäuseteil (11) wird mindestens ein Elektroden-Separator-Verbund (101) eingebracht.
d. Eine der Elektroden des Elektroden-Separator-Verbunds (101) wird elektrisch mit dem Deckelteil (12) und/oder dem becherförmigen Gehäuseteil (11) außerhalb des Bereichs der Polscheibe (14) und die andere der Elektroden wird elektrisch mit der Polscheibe (14) kontaktiert.
e. Vor oder nach der elektrischen Kontaktierung der Elektroden wird die Öffnung des becherförmigen Gehäuseteils (11) mit dem Deckelteil (12) verschlossen.

12. Verfahren nach Anspruch 11, umfassend den folgenden zusätzlichen Verfahrensschritt:
a. Das Verschließen der Öffnung des becherförmigen Gehäuseteils (11) mit dem Deckelteil (12) erfolgt durch Verschweißen, insbesondere durch Laser-Schweißen.

13. Verfahren nach Anspruch 11 oder Anspruch 12 mit dem folgenden zusätzlichen Merkmal:
a. Der Elektroden-Separator-Verbund (101) wird mit einem Elektrolyten versetzt.
